# EUROPEAN PATENT APPLICATION

(11) **EP 3 276 976 A1**
(43) Date of publication of application: **31.01.2018**
(21) Application number: 17182581.3
(22) Date of filing: 21.07.2017
(51) Int. Cl.: H04N 21/4788, H04N 21/2187, H04N 21/236

(54) **METHOD, APPARATUS, HOST TERMINAL, SERVER AND SYSTEM FOR PROCESSING LIVE BROADCASTING INFORMATION**

(30) Priority: 28.07.2016 CN 201610615595
(71) Applicant: Beijing Xiaomi Mobile Software Co., Ltd., Beijing 100085 (CN)
(72) Inventor: ZHENG, Yanqiang, BEIJING, 100085 (CN); LIU, Wei, BEIJING, 100085 (CN); SUN, Chao, BEIJING, 100085 (CN)
(74) Representative: Delumeau, François Guy

(57) **Abstract**

The present invention relates to a method, apparatus, host terminal, interaction server terminal, live broadcasting server and system for processing live broadcasting information. The method comprises: receiving (S101) live broadcasting interaction information sent by an interaction server; combining (S102) the live broadcasting interaction information and a live broadcasting video stream to get a target video stream; and sending (S103) the target video stream to a live broadcasting server, to enable the live broadcasting server to send the target video stream to other viewer terminals.

## Description

### FIELD

The present invention relates to the technical field of live broadcasting, and more particularly to a method and an apparatus for processing live broadcasting information, a host terminal, an interaction sever terminal, a live broadcasting sever and a system for processing live broadcasting information.

### BACKGROUND

Currently, after a live broadcasting room (e.g. a live broadcasting virtual room or a live broadcasting session) is created by a host, a viewer (e.g. a viewer of a video broadcast by the host in the live broadcasting room) may communicate with the host or other viewers by sending live broadcasting interaction information, such as bullet screen information (e.g. information which can be displayed at the same time as the broadcasted video), in the live broadcasting room. However, in the related techniques, after a piece of live broadcasting interaction information is sent by any viewer terminal, the live broadcasting interaction information will be broadcasted to the host terminal and to all the other viewer terminals. This manner of sending interaction information increases the consumption of the bandwidth significantly, and also increases the cost and power consumption of a device. Especially, when the number of viewers in the live broadcasting room increases sharply, the number of times the live broadcasting interaction information are sent increases significantly, resulting in great device cost and great bandwidth consumption.

### SUMMARY

Embodiments of the present invention provides a method and an apparatus for processing live broadcasting information, a host terminal, an interaction sever terminal, a live broadcasting sever and a system for processing live broadcasting information. The technical solutions are as follows:
In accordance with a first aspect of embodiments, the invention relates to a method for processing live broadcasting information, comprising: receiving live broadcasting interaction information sent by an interaction server, the live broadcasting interaction information being sent to the interaction server by an interacting viewer terminal; combining the live broadcasting interaction information and a live broadcasting video stream to get a target video stream; and sending the target video stream to a live broadcasting server, to enable the live broadcasting server to send the target video stream to other viewer terminals, wherein the interacting viewer terminal is any one of viewer terminals in the live broadcasting room where the host terminal resides, the other viewer terminals are viewer terminals in the live broadcasting room except the interacting viewer terminal.

In a particular embodiment, the live broadcasting video stream comprises: live broadcasting video information and/or live broadcasting audio information; and the live broadcasting interaction information comprises: bullet screen information or gift animation information, wherein the bullet screen information comprises at least one of: text information, system prompting information, and emoticon information.

In accordance with a second aspect of embodiments, the invention relates to another method for processing live broadcasting information, comprising: receiving live broadcasting interaction information sent by an interacting viewer terminal; and sending the live broadcasting interaction information to a host terminal, wherein the interacting viewer terminal is any one of viewer terminals in the live broadcasting room where the host terminal resides.

In a particular embodiment, the live broadcasting interaction information comprises: bullet screen information or gift animation information, wherein the bullet screen information comprises at least one of: text information, system prompting information, and emoticon information.

In accordance with a third aspect of embodiments, the invention relates to another method for processing live broadcasting information, comprising: receiving a target video stream sent by a host terminal, the target video stream being a combination of live broadcasting interaction information and a live broadcasting video stream; and sending the target video stream to other viewer terminal, the other viewer terminal being any one of viewer terminals in the live broadcasting room where the host terminal resides except an interacting viewer terminal, the interacting viewer terminal being the viewer terminal sending the live broadcasting interaction information.

In accordance with a fourth aspect of embodiments, the invention relates to an apparatus for processing live broadcasting information, comprising: a receiving module configured to receive live broadcasting interaction information sent by an interaction server, the live broadcasting interaction information being sent to the interaction server by an interacting viewer terminal; a combining module configured to combine the live broadcasting interaction information and a live broadcast video stream to get a target video stream; and a sending module configured to send the target video stream to a live broadcasting server, to enable the live broadcast server to send the target video stream to other viewer terminals, wherein the interacting viewer terminal is any one of viewer terminals in the live broadcasting room where the host terminal resides, the other viewer terminals are viewer terminals in the live broadcasting room except the interacting viewer terminal.

In a particular embodiment, the live broadcasting video stream comprises: live broadcasting video information and/or live broadcasting audio information; and the live broadcasting interaction information comprises: bullet screen information or gift animation information, wherein the bullet screen information comprises at least one of: text information, system prompting information, and emoticon information.

In accordance with a fifth aspect of embodiments, the invention relates to another apparatus for processing live broadcasting information, comprising: a receiving module configured to receive live broadcasting interaction information sent by an interacting viewer terminal; and a sending module configured to send the live broadcasting interaction information to a host terminal, wherein the interacting viewer terminal is any one of viewer terminals in the live broadcasting room where the host terminal resides.

In a particular embodiment, the live broadcasting interaction information comprises bullet screen information or gift animation information, wherein the bullet screen information comprises at least one of: text information, system prompting information, and emoticon information.

In accordance with a sixth aspect of embodiments, the invention relates to another apparatus for processing live broadcasting information is provided, comprising: a receiving module configured to receive a target video stream sent by a host terminal, the target video stream being a combination of live broadcasting interaction information and a live broadcasting video stream; and a sending module configured to send the target video stream to other viewer terminal, the other viewer terminal being any one of viewer terminals in the live broadcasting room where the host terminal resides except an interacting viewer terminal, the interacting viewer terminal being the viewer terminal sending the live broadcasting interaction information.

In accordance with a seventh aspect of embodiments, the invention relates to a host terminal, comprising: a processor; a memory for storing processor-executable instructions; wherein the processor is configured to: receive live broadcasting interaction information sent by an interaction server, the live broadcasting interaction information being sent to the interaction server by an interacting viewer terminal; combine the live broadcasting interaction information and a live broadcasting video stream to get a target video stream; and send the target video stream to a live broadcasting server, to enable the live broadcast server to send the target video stream to other viewer terminals, wherein the interacting viewer terminal is any one of viewer terminals in the live broadcasting room where the host terminal resides, the other viewer terminals are viewer terminals in the live broadcasting room except the interacting viewer terminal.

In accordance with an eighth aspect of, the invention relates to an interaction server, comprising: a processor; a memory for storing processor-executable instructions; wherein the processor is configured to: receive live broadcasting interaction information sent by an interacting viewer terminal; and send the live broadcasting interaction information to a host terminal, wherein the interacting viewer terminal is any one of viewer terminals in the live broadcasting room where the host terminal resides.

In accordance with a ninth aspect of embodiments, the invention relates to a live broadcasting server, comprising: a processor; a memory for storing processor-executable instructions; wherein the processor is configured to: receive a target video stream sent by a host terminal, the target video stream being a combination of live broadcasting interaction information and a live broadcasting video stream; and send the target video stream to other viewer terminal, the other viewer terminal being any one of viewer terminals in the live broadcasting room where the host terminal resides except an interacting viewer terminal, the interacting viewer terminal being the viewer terminal sending the live broadcasting interaction information.

In accordance with a tenth aspect of embodiments, the invention relates to a system for processing live broadcasting information, comprising: a host terminal, an interaction server and a live broadcasting server; the host terminal comprising the apparatus for processing live broadcasting information described in any of the foregoing fourth aspect of embodiments; the interaction server comprising the apparatus for processing live broadcasting information described in any of the foregoing fifth aspect of embodiments; and the live broadcasting server comprising the apparatus for processing live broadcasting information described in the foregoing sixth aspect of embodiments.

In accordance with an eleventh aspect of embodiments, the invention relates to a system for processing live broadcasting information, comprising: the host terminal described in the foregoing seventh aspect of embodiments; the interaction server described in the foregoing eighth aspect of embodiments; and the live broadcasting server described in the foregoing ninth aspect of embodiments.

In accordance with a twelfth aspect of embodiments, the invention relates to a computer program which, when being executed on a processor of a mobile terminal, performs any one of the above methods.

In accordance with a thirteenth aspect of embodiments, the invention relates to a non-transitory computer-readable storage medium having stored therein instructions that, when executed by a processor of a device, causes the device to perform any one of the above methods.

The technical solutions provided by embodiments of the present invention may comprise the following beneficial effects:
By sending the target video stream combined from the live broadcasting interaction information and live broadcasting video stream to the live broadcasting server, it is convenient for the live broadcasting server to send the target video stream to the other viewer terminals, such that an viewer terminal can see the bullet screen information and/or the host terminal's gift sent by an interacting viewer terminal which sends the live broadcasting interaction information directly while watching the live broadcasting of the host terminal. In this way to combine the live broadcasting interaction information and live broadcasting video stream, the interaction server may only need to send the live broadcasting interaction information one time (i.e., to the host terminal) for all the other viewer terminals in the live broadcasting room to see the live broadcasting interaction information sent by the interacting viewer terminal, regardless of how many viewers are in the live broadcasting room. This avoids the need to send the live broadcasting interaction information to all the other viewers in the live broadcasting room for the other viewer terminals in the live broadcasting room to see the live broadcasting interaction information when the interaction server receives the live broadcasting interaction information, resulting in reduced times sending the live broadcasting interaction information and reduced bandwidth occupation.

It is to be understood that the forgoing general description and the following detailed description are illustrative and explanatory only, and are not intended to limit the present invention.

### BRIEF DESCRIPTION OF THE DRAWINGS

The accompanying drawings, which are incorporated in and constitute a part of this specification, illustrate embodiments consistent with the present invention and, together with the specification, serve to explain the principles of the present invention.
Fig. 1 is a flow chart illustrating a method for processing live broadcasting information according to an exemplary embodiment;
Fig. 2 is a flow chart illustrating another method for processing live broadcasting information according to an exemplary embodiment;
Fig. 3 is a flow chart illustrating yet another method for processing live broadcasting information according to an exemplary embodiment;
Fig. 4 is a block diagram illustrating an apparatus for processing live broadcasting information according to an exemplary embodiment;
Fig. 5 is a block diagram illustrating another apparatus for processing live broadcasting information according to an exemplary embodiment;
Fig. 6A is a block diagram illustrating yet another apparatus for processing live broadcasting information according to an exemplary embodiment;
Fig. 6B is a block diagram illustrating a system for processing live broadcasting information according to an exemplary embodiment.
Fig. 7 is a block diagram illustrating an apparatus suitable for processing live broadcasting information according to an exemplary embodiment.
Fig. 8 is a block diagram illustrating another apparatus suitable for processing live broadcasting information according to an exemplary embodiment.

### DETAILED DESCRIPTION

Exemplary embodiments will now be illustrated in detail, examples of which are illustrated in the accompanying drawings. When the following description refers to the accompanying drawings, the same numbers in different drawings represent the same or similar elements, unless otherwise described. The implementations described in the following exemplary embodiments do not represent all of the implementations consistent with the present invention. Instead, they are only examples of devices and methods consistent with aspects of the present invention as recited in the appended claims.

Currently, after a live broadcasting room is created by a host, viewers may communicate with the host or other viewers by sending live broadcasting interaction information, such as bullet screen information, in the live broadcasting room. However, in the related techniques, after a piece of live broadcasting interaction information is sent by any viewer terminal, the live broadcasting interaction information will be broadcasted to the host terminal and all the other viewer terminals. This method for sending interaction information increases the consumption of bandwidth significantly, and the cost and power consumption of devices. Especially, when the number of viewers in the live broadcasting room increases sharply, the times for sending the live broadcasting interaction information increases significantly, resulting in great device cost and bandwidth cost.

In addition, webcast audio/video data stream and text data stream (i.e., the live broadcasting interaction information) in the related techniques, respectively, occupy one communication channel independently, which requires additional channel distribution when the live broadcasting server sends the live broadcasting interaction information to viewer terminals, causing additional cost consumption.

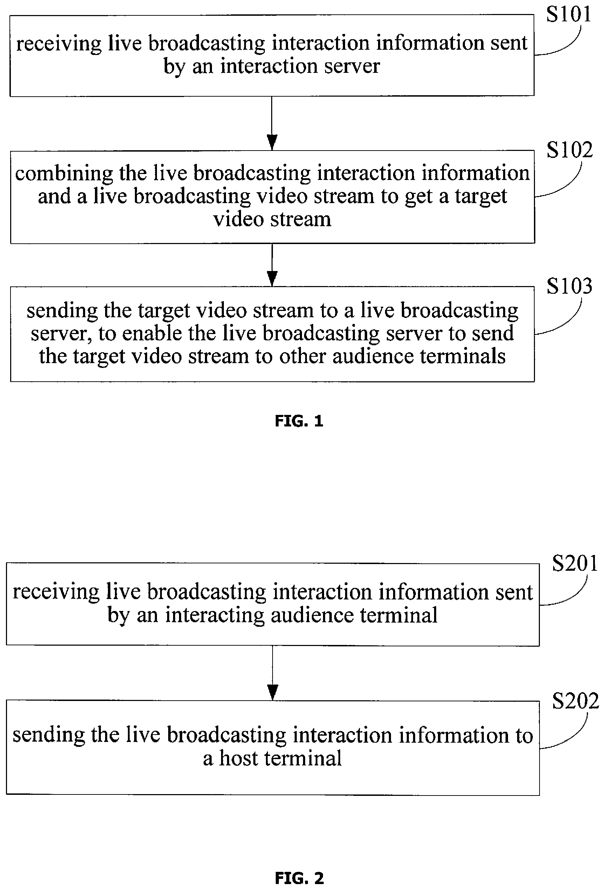

To solve the foregoing technical problems, embodiments of the present invention provide a method for processing live broadcasting information. This method may be used in program, system and apparatus for processing live broadcasting information and may be performed by terminals such as mobile phone, tablet, computer, etc. As shown in Fig. 1, the method may comprise steps S101 to S103.

In step S101, live broadcasting interaction information sent by an interaction server may be received, the live broadcasting interaction information may be sent to the interaction server by an interacting viewer terminal.

The live broadcasting interaction information may be one or more pieces of bullet screen information and/or one or more pieces of gift animation information sent by an interacting viewer terminal, while the interacting viewer terminal may be any one of viewer terminals in the live broadcasting room where the host terminal resides.

In step S102, the live broadcasting interaction information and a live broadcasting video stream may be combined to get a target video stream.

The live broadcasting video stream may be the video stream played by the host terminal when the webcast is ongoing, and may comprise live broadcasting video information and/or live broadcasting audio information.

By combining the live broadcasting interaction information and the live broadcasting video stream, a target video stream carrying the live broadcasting interaction information may be acquired, such that a viewer terminal can see the bullet screen information and/or the host terminal's gift sent by an interacting viewer terminal which sends the live broadcasting interaction information directly while watching the live broadcasting of the host terminal.

In addition, when combining the live broadcasting interaction information and the live broadcasting video stream, if the live broadcasting video stream has multiple frames of video stream, then the live broadcasting interaction information may be combined with any one of the multiple frames of video stream. After the combination, the live broadcasting interaction information and the live broadcasting video stream may respectively occupy one image layer, to make it convenient for viewers to hide the live broadcasting interaction information if they do not want to watch the live broadcasting interaction information.

In step S103, the target video stream may be sent to a live broadcasting server to enable the live broadcasting server to send the target video stream to other viewer terminals, wherein the interacting viewer terminal may be any one of viewer terminals in the live broadcasting room where the host terminal resides, the other viewer terminals may be viewer terminals in the live broadcasting room except the interacting viewer terminal.

By sending the target video stream combined from the live broadcasting interaction information and live broadcasting video stream to the live broadcasting server, it is convenient for the live broadcasting server to send the target video stream to the other viewer terminals, such that a viewer terminal can see the bullet screen information and/or the host terminal's gift sent by an interacting viewer terminal which sends the live broadcasting interaction information directly while watching the live broadcast of the host terminal. In this way to combine the live broadcasting interaction information and live broadcasting video stream, the interaction server may only need to send the live broadcasting interaction information one time (i.e., to the host terminal) for all the other viewer terminals in the live broadcasting room to see the live broadcasting interaction information sent by the interacting viewer terminal, regardless of how many viewers are in the live broadcasting room. This avoids the need to send the live broadcasting interaction information to all the other viewers in the live broadcasting room to make the other viewer terminals in the live broadcasting room see the live broadcasting interaction information when the interaction server receives the live broadcasting interaction information, resulting in reduced times for sending the live broadcasting interaction information and reduced bandwidth occupation.

In addition, by combining the live broadcasting interaction information and the live broadcasting video stream, the live broadcasting video stream and the live broadcasting interaction information may share one channel, which avoids consuming the extra network cost resulting from additional channel occupation.

In a particular embodiment, the live broadcasting video stream may comprise live broadcasting video information and/or live broadcasting audio information.

In a particular embodiment, the live broadcasting interaction information may comprise bullet screen information or gift animation information, wherein the bullet screen information may comprise at least one of: text information, system prompting information, and emoticon information.

The live broadcasting interaction information may be bullet screen information or gift animation information used to represent the gift animation given to the host terminal by an interacting viewer terminal, while the bullet screen information may include but is not limited to: text information, emoticon information, and system prompting information sent by the interacting viewer terminal, for example, image information sent by the interacting viewer terminal may also be included.

In addition, the system prompting information may include: prompting information about an interacting viewer terminal sending a gift, prompting information about an interacting viewer terminal entering the live broadcasting room, prompting information about an interacting viewer terminal leaving the live broadcasting room, prompting information activated by an interacting viewer terminal, etc.

Embodiments of the present invention provide another method for processing live broadcasting information. This method may be performed by an interaction server access layer between the host terminal and the viewer terminals (application (APP) between the host terminal and the viewer terminals), wherein the interaction server may store identification information (e.g., address information) of the host terminal and the viewer terminals. The method may comprise:
In step S201, live broadcasting interaction information sent by an interacting viewer terminal may be received.

In step S202, the live broadcasting interaction information may be sent to a host terminal, wherein the interacting viewer terminal may be any one of viewer terminals in the live broadcasting room where the host terminal resides.

When the live broadcasting interaction information sent by any one of the viewer terminals in the live broadcasting room is received, by sending the live broadcasting interaction information to the host terminal directly, rather than to the host terminal as well as all the other viewer terminals, the interaction server may only need to send the live broadcasting interaction information one time, regardless of how many viewer terminals are in the live broadcasting room. In this way, it may be avoided for the interaction server to need to send the live broadcasting interaction information to all the other viewers in the live broadcasting room to make the other viewer terminals in the live broadcasting room able to watch the live broadcasting interaction information. Thus, on the basis of reduced times for sending the live broadcasting interaction information and reduced bandwidth occupation, the host terminal may combine the live broadcasting interaction information and its live broadcasting video stream and then send the target video stream to other viewer terminals by the live broadcasting server, to ensure that other viewer terminals may watch the live broadcasting interaction information sent by the interacting viewer terminal while watching the live broadcasting video stream of the host terminal.

The present embodiment may reduce the times for sending the live broadcasting interaction information and occupied bandwidth, thus the power consumption of the interaction server may be reduced, and the configuration requirement for the interaction server and device cost may be lower.

In one embodiment, the live broadcasting interaction information may comprise bullet screen information or gift animation information, wherein the bullet screen information may comprise at least one of: text information, system prompting information, and emoticon information.

The live broadcasting interaction information may be bullet screen information or gift animation information used to represent the gift given to the host terminal by an interacting viewer terminal, while the bullet screen information may include but not limited to: text information, emoticon information, and system prompting information sent by the interacting viewer terminal, for example, image information sent by the interacting viewer terminal may also be included. The system prompting information may include: prompting information for an interacting viewer terminal sends a gift, prompting information for an interacting viewer terminal enters the live broadcasting room, prompting information for an interacting viewer terminal leaves the live broadcasting room, prompting information activated by an interacting viewer terminal, etc.

Embodiments of the present invention provide yet another method for processing live broadcasting information. This method may be performed by a live broadcasting server, and the network used by the live broadcasting server may be Content Delivery Network. The method may comprise:
In step S301, a target video stream sent by a host terminal may be received, the target video stream may be a combination of live broadcasting interaction information and a live broadcasting video stream.

In step S302, the target video stream may be sent to other viewer terminal, the other viewer terminal may be any one of viewer terminals in the live broadcasting room where the host terminal resides except an interacting viewer terminal, and the interacting viewer terminal may be the viewer terminal sending the live broadcasting interaction information.

By sending the target video stream combined from the live broadcasting interaction information and live broadcasting video stream to other viewer terminals, an viewer terminal can see the bullet screen information and/or the host terminal's gift sent by an interacting viewer terminal which sends the live broadcasting interaction information directly while watching the live broadcasting of the host terminal. In this way to combine the live broadcasting interaction information and live broadcasting video stream, the interaction server may only need to send the live broadcasting interaction information one time for all the other viewer terminals in the live broadcasting room to see the live broadcasting interaction information sent by the interacting viewer terminal. This avoids the need for the interaction server to send the live broadcasting interaction information to all the other viewers in the live broadcasting room to make the other viewer terminals in the live broadcasting room see the live broadcasting interaction information when the live broadcasting interaction information is received, so as to reduce the times of sending the live broadcasting interaction information and bandwidth occupation.

In addition, the target video stream may be pushed to the other viewer terminals actively when sending the target video stream to the other viewer terminals, or a request sent by the other viewer terminals for acquiring the live broadcasting video stream may be received, the request carrying the address of the video stream of the host terminal, this address being for acquiring the target video stream carrying the live broadcasting interaction information sent by the host terminal , so as to send the target video stream carrying the live broadcasting interaction information to other viewer terminals.

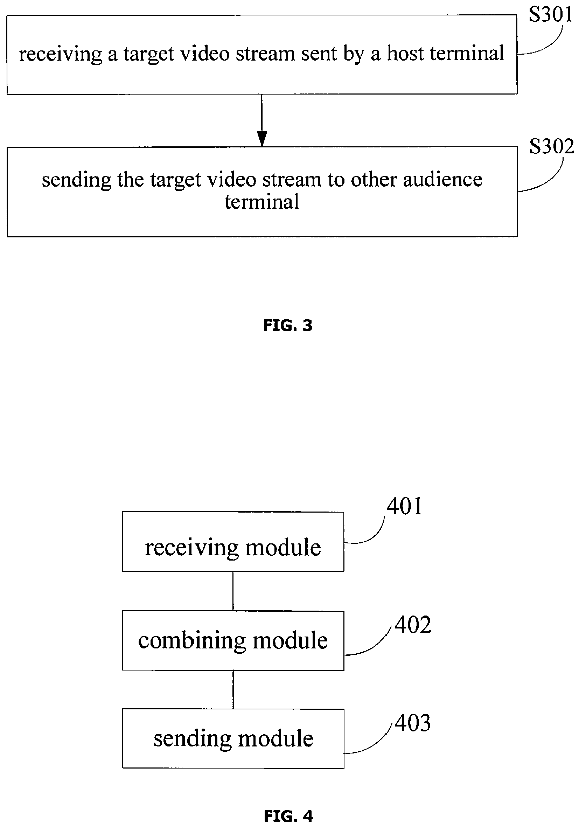

Corresponding to the foregoing method for processing live broadcasting information provided by embodiments of the present invention, the fourth aspect of the embodiments of the present invention also provides an apparatus for processing the live broadcasting information, which may be used at the host terminal. As shown in Fig. 4, the apparatus may comprise:
A receiving module 401 may be configured to receive live broadcasting interaction information sent by an interaction server, the live broadcasting interaction information may be sent to the interaction server by an interacting viewer terminal.

A combining module 402 may be configured to combine the live broadcasting interaction information and a live broadcast video stream to get a target video stream.

A sending module 403 may be configured to send the target video stream to a live broadcasting server, to enable the live broadcast server to send the target video stream to other viewer terminals, wherein the interacting viewer terminal may be any one of viewer terminals in the live broadcasting room where the host terminal resides, the other viewer terminals may be viewer terminals in the live broadcasting room except the interacting viewer terminal.

In one embodiment, the live broadcasting video stream may comprise live broadcasting video information and/or live broadcasting audio information.

The live broadcasting interaction information may comprise bullet screen information or gift animation information, wherein the bullet screen information may comprise at least one of: text information, system prompting information, and emoticon information.

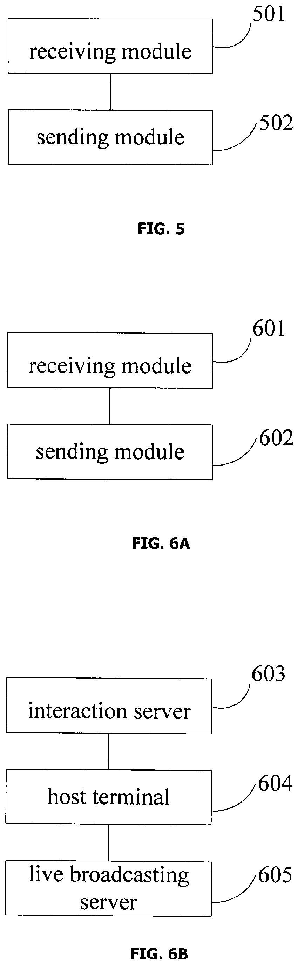

Corresponding to the foregoing method for processing live broadcasting information provided by embodiments of the present invention, the fifth aspect of the embodiments of the present invention also provides another apparatus for processing the live broadcasting information, which may be used at the interaction server. As shown in Fig. 5, the apparatus may comprise:
A receiving module 501 may be configured to receive live broadcasting interaction information sent by an interacting viewer terminal.

A sending module 502 may be configured to send the live broadcasting interaction information to a host terminal, wherein the interacting viewer terminal may be any one of viewer terminals in the live broadcasting room where the host terminal resides.

In one embodiment, the live broadcasting interaction information may comprise bullet screen information or gift animation information, wherein the bullet screen information may comprise at least one of: text information, system prompting information, and emoticon information.

Corresponding to the foregoing method for processing live broadcasting information provided by embodiments of the present invention, the sixth aspect of the embodiments of the present invention also provides yet another apparatus for processing the live broadcasting information, which may be used at the live broadcasting server. As shown in Fig. 6A, the apparatus may comprise:
A receiving module 601 may be configured to receive a target video stream sent by a host terminal, and the target video stream may be a combination of live broadcasting interaction information and a live broadcasting video stream.

A sending module 602 may be configured to send the target video stream to other viewer terminal, the other viewer terminal may be any one of viewer terminals in the live broadcasting room where the host terminal resides except an interacting viewer terminal, the interacting viewer terminal being the viewer terminal sending the live broadcasting interaction information.

Shown as Fig. 6B, corresponding to the foregoing method for processing live broadcasting information provided by embodiments of the present invention, the seventh aspect of the embodiments of the present invention also provides a system for processing the live broadcasting information, the system may comprise: a host terminal 604, an interaction server 603 and a live broadcasting server 605.

The host terminal 604 may comprise the apparatus for processing live broadcasting information described in any of the foregoing fourth aspect of embodiments.

The interaction server 603 may comprise the apparatus for processing live broadcasting information described in any of the foregoing fifth aspect of embodiments.

The live broadcasting server 605 may comprise the apparatus for processing live broadcasting information described in the foregoing sixth aspect of embodiments.

In addition, the system should also comprise other viewer terminals in the live broadcasting room where the host terminal 604 resides except the interacting viewer terminal. The technical effect of the system is the same as that of the foregoing method for processing live broadcasting information, which is omitted here.

In accordance with the eighth aspect of embodiments of the present invention, a host terminal is provided. The host terminal may comprise: a processor; a memory for storing processor-executable instructions; wherein the processor may be configured to: receive live broadcasting interaction information sent by an interaction server, the live broadcasting interaction information may be sent to the interaction server by an interacting viewer terminal; combine the live broadcasting interaction information and a live broadcasting video stream to get a target video stream; and send the target video stream to a live broadcasting server, to enable the live broadcast server to send the target video stream to other viewer terminals, wherein the interacting viewer terminal may be any one of viewer terminals in the live broadcasting room where the host terminal resides, the other viewer terminals may be viewer terminals in the live broadcasting room except the interacting viewer terminal.

The processor may also be configured to: the live broadcasting video stream may comprise live broadcasting video information and/or live broadcasting audio information; the live broadcasting interaction information may comprise bullet screen information or gift animation information, wherein the bullet screen information may comprise at least one of: text information, system prompting information, and emoticon information.

In accordance with the ninth aspect of embodiments of the present invention, an interaction server is provided. The interaction server may comprise: a processor; a memory for storing processor-executable instructions; wherein the processor may be configured to: receive live broadcasting interaction information sent by an interacting viewer terminal; and send the live broadcasting interaction information to a host terminal, wherein the interacting viewer terminal may be any one of viewer terminals in the live broadcasting room where the host terminal resides.

The processor may also be configured to: the live broadcasting interaction information may comprise bullet screen information or gift animation information, wherein the bullet screen information may comprise at least one of: text information, system prompting information, and emoticon information.

In accordance with the tenth aspect of embodiments of the present invention, a live broadcasting server is provided. The live broadcasting server may comprise: a processor; a memory for storing processor-executable instructions; wherein the processor may be configured to: receive a target video stream sent by a host terminal, the target video stream may be a combination of live broadcasting interaction information and a live broadcasting video stream; and send the target video stream to other viewer terminal, the other viewer terminal may be any one of viewer terminals in the live broadcasting room where the host terminal resides except an interacting viewer terminal, the interacting viewer terminal may be the viewer terminal sending the live broadcasting interaction information.

Shown as Fig. 6B, corresponding to the foregoing method for processing live broadcasting information provided by embodiments of the present invention, the eleventh aspect of the embodiments of the present invention also provides another system for processing the live broadcasting information, the system may comprise:
The host terminal 604 described in the foregoing eighth aspect of embodiments.

The interaction server 603 described the foregoing ninth aspect of embodiments.

The live broadcasting server 605 described in the foregoing tenth aspect of embodiments.

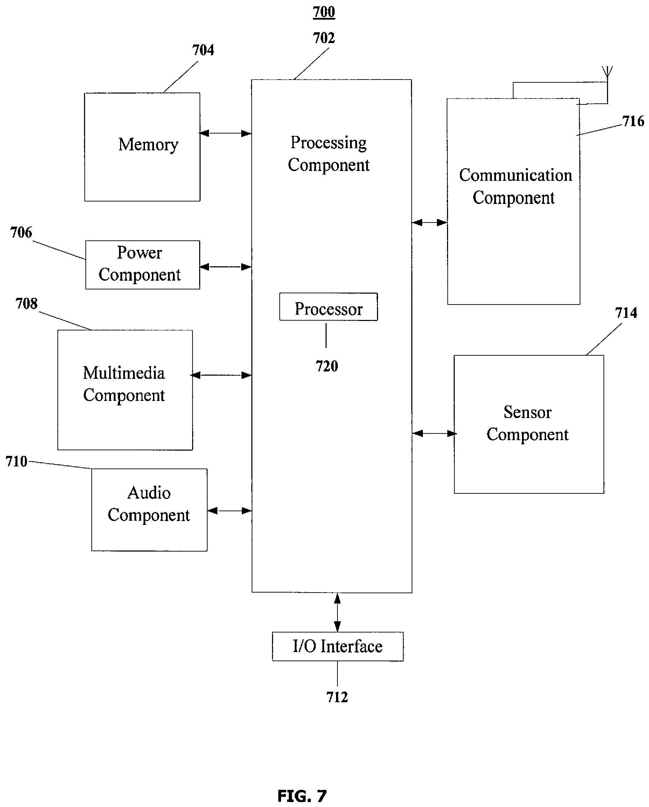

Fig. 7 is a block diagram of a device 700 for processing the live broadcasting information illustrated according to an exemplary embodiment. For example, the device 700 may be a mobile phone, computer, digital broadcast terminal, messaging device, game console, tablet device, medical device, fitness equipment, personal digital assistant, etc.

Referring to Fig. 7, the device 700 may comprise one or more of the following components: a processing component 702, a memory 704, a power component 706, a multimedia component 708, an audio component 710, an input/output (I/O) interface 712, a sensor component 714, and a communication component 716.

The processing component 702 typically controls overall operation of the device 700, such as the operations associated with display, telephone call, data communications, camera operations and recording operations. The processing element 702 may comprise one or more processors 720 to execute instructions to perform all or part of the steps in the above described methods. Additionally, the processing component 702 may comprise one or more modules which facilitate the interaction between the processing component 702 and other components. For instance, the processing component 702 may comprise multimedia module to facilitate the interaction between the multimedia component 708 and the processing component 702.

The memory 704 is configured to store various types of data to support the operation of the device 700. Examples of such data comprise instructions for any applications or methods operated on the device 700, contacts data, phonebook data, messages, images, videos, etc. The memory 704 may be implemented using any type of volatile or non-volatile memory devices or a combination thereof, such as a static random access memory (SRAM), an electrically erasable programmable read only memory (EEPROM), an erasable programmable read only memory (EPROM), a programmable read-only memory (PROM), a read-only memory (ROM), a magnetic memory, a flash memory, a magnetic disk or optical disk.

The power component 706 provides power to various components of the device 700. The power component 706 may comprise a power management system, one or more power sources, and any other components associated with the generation, management, and distribution of power in the device 700.

The multimedia component 708 comprises a screen providing an output interface between the device 700 and the user. In some embodiments, the screen may comprise a liquid crystal display (LCD) and a touch panel (TP). If the screen comprises the touch panel, the screen may be implemented as a touch screen to receive input signal from the users. The touch panel comprises one or more touch sensors to sense touches, swipes and gestures on the touch panel. The touch sensor may not only sense a boundary of a touch or swipe action, but also detect the duration and pressure associated with the touch or swipe operation. In some embodiments, the multimedia component 708 comprises one front camera and/or rear camera. When the device 700 is in an operation mode, such as a shooting mode or a video mode, the front camera and/or rear camera may receive external multimedia data. Each front camera and rear camera may be a fixed optical lens system or have focal length and optical zoom capability.

The audio component 710 is configured to output and/or input audio signals. For example, the audio component 710 comprises a microphone (MIC) configured to receive an external audio signal when the device 700 is in an operation mode, such as a call mode, a recording mode and a voice recognition mode. The received audio signal may be further stored in the memory 704 or transmitted via the communication component 716. In some embodiments, the audio component 710 further comprises a speaker to output audio signals.

The I/O interface 712 provides an interface between the processing component 702 and peripheral interface modules, such as a keyboard, a click wheel, buttons, and the like. The buttons may comprise, but are not limited to: a home button, a volume button, a starting button, and a locking button.

The sensor component 714 comprises one or more sensors to provide various aspects of state assessments for the device 700. For instance, the sensor component 714 may detect an open/closed state of the device 700, relative positioning of components, such as the display and the keypad of the device 700, the sensor component 714 may also detect a position change of the device 700 or a component thereof, a presence or absence of a contact between the user and the device 700, an orientation or acceleration/deceleration of the device 700, and a temperature change of the device 700. The sensor component 714 may comprise a proximity sensor configured to detect the presence of nearby objects without any physical contact. The sensor component 714 may further comprise a light sensor, such as a CMOS or CCD image sensor, for use in imaging applications. In some embodiments, the sensor component 714 may further comprise an accelerometer sensor, a gyroscope sensor, a magnetic sensor, a pressure sensor, a microwave sensor, or a temperature sensor.

The communication component 716 is configured to facilitate the device 700 to communication, wired or wirelessly, with other devices. The device 700 can access a communication standard based wireless network, such as WiFi, 2G, or 3G, or a combination thereof. In one exemplary embodiment, the communication component 716 receives a broadcast signal from an external broadcast management system or broadcasts the associated information via a broadcast channel. In one exemplary embodiment, the communication component 716 further comprises a near field communication (NFC) module to facilitate short-range communication. For example, the NFC module may be implemented based on radio frequency identification (RFID) technique, infrared data association (IrDA) technique, ultra-wideband (UWB) technique, Bluetooth (BT) technique, and other techniques.

In an exemplary embodiment, the device 700 may be implemented with one or more application specific integrated circuits (ASIC), digital signal processors (DSP), digital signal processing devices (DSPD), programmable logic devices (PLD), field programmable gate arrays (FPGA), controllers, micro-controllers, microprocessors, or other electronic components, for performing the above described methods.

In an exemplary embodiment, there is also provided a non-transitory computer-readable storage medium including instructions, such as the memory 704 including instructions, the instructions can be executed by the processor 720 of the device 700 to implement the above described methods. For example, the non-transitory computer-readable storage medium may be a ROM, a random access memory (RAM), a CD-ROM, a magnetic tape, a floppy disc, and an optical data storage device, etc.

A non-transitory computer-readable storage medium, when the instruction in the storage medium is executed by the processor of the device 700, enable the device 700 to perform a method for processing live broadcasting information which may comprise: receiving live broadcasting interaction information sent by an interaction server, the live broadcasting interaction information may be sent to the interaction server by an interacting viewer terminal; combining the live broadcasting interaction information and a live broadcasting video stream to get a target video stream; and sending the target video stream to a live broadcasting server, to enable the live broadcasting server to send the target video stream to other viewer terminals, wherein the interacting viewer terminal may be any one of viewer terminals in the live broadcasting room where the host terminal resides, the other viewer terminals may be viewer terminals in the live broadcasting room except the interacting viewer terminal.

In one embodiment, the live broadcasting video stream may comprise live broadcasting video information and/or live broadcasting audio information.

The live broadcasting interaction information may comprise bullet screen information or gift animation information, wherein the bullet screen information may comprise at least one of: text information, system prompting information, and emoticon information.

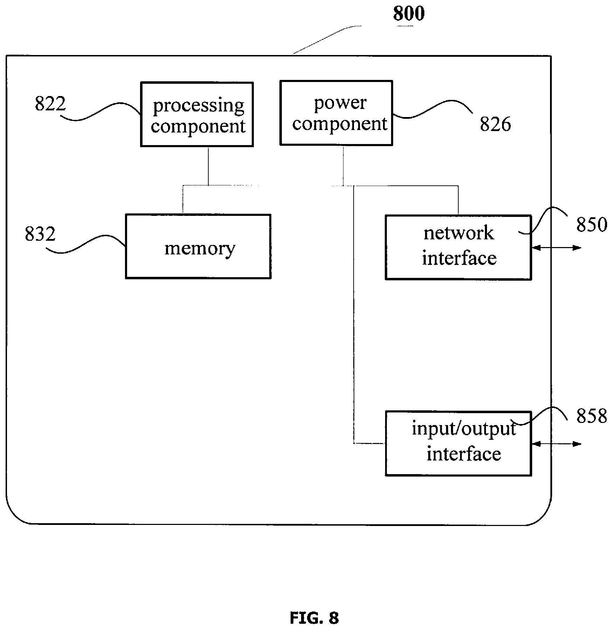

Fig. 8 is a block diagram illustrating an apparatus 800 for processing live broadcasting information according to an exemplary embodiment. For example, the device 800 may be provided as a server. With reference to Fig. 8, the device 800 comprises a processing component 822 which may further comprise one or more processors, and a memory resource represented by the memory 832 which may be configured to store instructions executed by the processing component 822, such as application programs. The application programs stored in the memory 832 may comprise one or more modules, each of which corresponding to a group of instructions. Moreover, the processing component 822 may be configured to perform instructions to perform the forgoing methods.

The device 800 may also comprise a power component 826 configured to perform power management of the device 800, a wired or wireless network interface 850 configured to connect the device 800 to the network, and an input/output (I/O) interface 858. The device 800 may operate based on the operating system stored in the memory 832, for example, Windows Server TM, Mac OS XTM, Unix TM, Linux TM, FreeBSD TM, or similar.

A non-transitory computer-readable storage medium, when the instruction in the storage medium is executed by the processor of the device 800, enable the device 800 to perform a method for processing live broadcasting information which may comprise: receiving live broadcasting interaction information sent by an interacting viewer terminal; and sending the live broadcasting interaction information to a host terminal, wherein the interacting viewer terminal may be any one of viewer terminals in the live broadcasting room where the host terminal resides.

In one embodiment, the live broadcasting interaction information may comprise bullet screen information or gift animation information, wherein the bullet screen information may comprise at least one of: text information, system prompting information, and emoticon information.

A non-transitory computer-readable storage medium, when the instruction in the storage medium is executed by the processor of the device 800, enable the device 800 to perform a method for processing live broadcasting information which may comprise: receiving a target video stream sent by a host terminal, the target video stream may be a combination of live broadcasting interaction information and a live broadcasting video stream; and sending the target video stream to other viewer terminal, the other viewer terminal may be any one of viewer terminals in the live broadcasting room where the host terminal resides except an interacting viewer terminal, the interacting viewer terminal may be the viewer terminal sending the live broadcasting interaction information.

Other embodiments of the present invention will be apparent to those skilled in the art from consideration of the specification and practice of the invention disclosed herein. The present application is intended to cover any variations, uses or adaptations of the present invention, and these variations, uses and adaptations follow the general principles of the present invention and comprise common general knowledge and conventional techniques of the art which are not disclosed herein. The specification and the embodiments are only considered as exemplary, and a true scope of the present invention is indicated by the following claims.

It should be appreciated that the present invention is not limited to the exact structures that have been described above and illustrated in the accompanying drawings, and that various modifications and changes can be made without departing from the scope thereof. It is intended that the scope of the present invention is only limited by the appended claims.

## Claims

1. A method performed by a host terminal for processing live broadcasting information, **characterized in that** the method comprises:
receiving (S101) live broadcasting interaction information sent by an interaction server, the live broadcasting interaction information being sent to the interaction server by an interacting viewer terminal;
combining (S102) the live broadcasting interaction information and a live broadcasting video stream to get a target video stream; and
sending (S103) the target video stream to a live broadcasting server, to enable the live broadcasting server to send the target video stream to other viewer terminals, wherein the interacting viewer terminal is any one of viewer terminals in the live broadcasting room where the host terminal resides, the other viewer terminals are viewer terminals in the live broadcasting room except the interacting viewer terminal.

2. The method of claim 1, wherein:
the live broadcasting video stream comprises: live broadcasting video information and/or live broadcasting audio information; and
the live broadcasting interaction information comprises: bullet screen information or gift animation information, wherein the bullet screen information comprises at least one of: text information, system prompting information, and emoticon information.

3. A method performed by an interaction server for processing live broadcasting information, **characterized in that** the method comprises:
receiving (S201) live broadcasting interaction information sent by an interacting viewer terminal; and
sending (S202) the live broadcasting interaction information to a host terminal, wherein the interacting viewer terminal is any one of viewer terminals in the live broadcasting room where the host terminal resides.

4. The method of claim 3, wherein:
the live broadcasting interaction information comprises: bullet screen information or gift animation information, wherein the bullet screen information comprises at least one of: text information, system prompting information, and emoticon information.

5. A method performed by a live broadcasting server for processing live broadcasting information, **characterized in that** the method comprises:
receiving (S301) a target video stream sent by a host terminal, the target video stream being a combination of live broadcasting interaction information and a live broadcasting video stream; and
sending (S302) the target video stream to other viewer terminal, the other viewer terminal being any one of viewer terminals in the live broadcasting room where the host terminal resides except an interacting viewer terminal, the interacting viewer terminal being the viewer terminal sending the live broadcasting interaction information.

6. An apparatus used in a host terminal for processing live broadcasting information, **characterized in that** the apparatus comprises:
a receiving module (401) configured to receive live broadcasting interaction information sent by an interaction server, the live broadcasting interaction information being sent to the interaction server by an interacting viewer terminal;
a combining module (402) configured to combine the live broadcasting interaction information and a live broadcast video stream to get a target video stream; and
a sending module (403) configured to send the target video stream to a live broadcasting server, to enable the live broadcast server to send the target video stream to other viewer terminals, wherein the interacting viewer terminal is any one of viewer terminals in the live broadcasting room where the host terminal resides, the other viewer terminals are viewer terminals in the live broadcasting room except the interacting viewer terminal.

7. The apparatus of claim 6, wherein:
the live broadcasting video stream comprises: live broadcasting video information and/or live broadcasting audio information; and
the live broadcasting interaction information comprises: bullet screen information or gift animation information, wherein the bullet screen information comprises at least one of: text information, system prompting information, and emoticon information.

8. An apparatus used in an interaction server for processing live broadcasting information, **characterized in that** the apparatus comprises:
a receiving module (501) configured to receive live broadcasting interaction information sent by an interacting viewer terminal; and
a sending module (502) configured to send the live broadcasting interaction information to a host terminal, wherein the interacting viewer terminal is any one of viewer terminals in the live broadcasting room where the host terminal resides.

9. The apparatus of claim 8, wherein:
the live broadcasting interaction information comprises: bullet screen information or gift animation information, wherein the bullet screen information comprises at least one of: text information, system prompting information, and emoticon information.

10. An apparatus used in a live broadcasting server for processing live broadcasting information, **characterized in that** the apparatus comprises:
a receiving module (601) configured to receive a target video stream sent by a host terminal, the target video stream being a combination of live broadcasting interaction information and a live broadcasting video stream; and
a sending module (602) configured to send the target video stream to other viewer terminal, the other viewer terminal being any one of viewer terminals in the live broadcasting room where the host terminal resides except an interacting viewer terminal, the interacting viewer terminal being the viewer terminal sending the live broadcasting interaction information.

11. A host terminal, **characterized in that** the host terminal comprises:
a processor;
a memory for storing processor-executable instructions;
wherein the processor is configured to:
receive live broadcasting interaction information sent by an interaction server, the live broadcasting interaction information being sent to the interaction server by an interacting viewer terminal;
combine the live broadcasting interaction information and a live broadcasting video stream to get a target video stream; and
send the target video stream to a live broadcasting server, to enable the live broadcast server to send the target video stream to other viewer terminals, wherein the interacting viewer terminal is any one of viewer terminals in the live broadcasting room where the host terminal resides, the other viewer terminals are viewer terminals in the live broadcasting room except the interacting viewer terminal.

12. An interaction server, **characterized in that** the interaction server comprises:
a processor;
a memory for storing processor-executable instructions;
wherein the processor is configured to:
receive live broadcasting interaction information sent by an interacting viewer terminal; and
send the live broadcasting interaction information to a host terminal, wherein the interacting viewer terminal is any one of viewer terminals in the live broadcasting room where the host terminal resides.

13. A live broadcasting server, **characterized in that** the live broadcasting server comprises:
a processor;
a memory for storing processor-executable instructions;
wherein the processor is configured to:
receive a target video stream sent by a host terminal, the target video stream being a combination of live broadcasting interaction information and a live broadcasting video stream; and
send the target video stream to other viewer terminal, the other viewer terminal being any one of viewer terminals in the live broadcasting room where the host terminal resides except an interacting viewer terminal, the interacting viewer terminal being the viewer terminal sending the live broadcasting interaction information.

14. A system for processing live broadcasting information, **characterized in that** the system comprises: a host terminal, an interaction server and a live broadcasting server;
the host terminal comprising the apparatus for processing live broadcasting information of claim 6 or 7;
the interaction server comprising the apparatus for processing live broadcasting information of claim 8 or 9; and
the live broadcasting server comprising the apparatus for processing live broadcasting information of claim 10.

15. A system for processing live broadcasting information, **characterized in that** the system comprises: the host terminal of claim 11, the interaction server of claim 12 and the live broadcasting server of claim 13.
